# EUROPÄISCHE PATENTSCHRIFT

(11) **EP 2 558 263 B1**
(45) Veröffentlichungstag und Bekanntmachung des Hinweises auf die Patenterteilung: **22.01.2014**
(21) Anmeldenummer: 11718234.5
(22) Anmeldetag: 13.04.2011
(51) Int. Cl.: B29B 17/04

(54) **VORRICHTUNG ZUM AUFBEREITEN VON KUNSTSTOFFMATERIAL**
APPARATUS FOR PROCESSING PLASTICS MATERIAL
DISPOSITIF POUR PRÉPARER UNE MATIÈRE PLASTIQUE

(30) Priorität: 14.04.2010 AT 6002010
(43) Veröffentlichungstag der Anmeldung: 20.02.2013
(60) Teilanmeldung: 13189929.6
(73) Patentinhaber: EREMA Engineering Recycling Maschinen und Anlagen Gesellschaft m.b.H., 4052 Ansfelden (AT)
(72) Erfinder: WEIGERSTORFER, Georg, A-4030 Linz/Ebelsberg (AT); FEICHTINGER, Klaus, A-4040 Linz (AT); HACKL, Manfred, A-4040 Linz-Urfahr (AT); WENDELIN, Gerhard, A-4030 Linz (AT)
(74) Vertreter: Wildhack, Andreas
(86) Internationale Anmeldenummer: PCT/AT2011/000180
(87) Internationale Veröffentlichungsnummer: WO 2011/127508

(56) Entgegenhaltungen:
- EP-A1- 1 273 412
- WO-A1-02/36318
- WO-A1-2004/108379

## Beschreibung

Die Erfindung betrifft eine Vorrichtung gemäß dem Oberbegriff des Anspruchs 1.

Aus dem Stand der Technik sind zahlreiche Vorrichtungen, umfassend einen Aufnahmebehälter bzw. Schneidverdichter zum Zerkleinern, Erwärmen, Erweichen und Aufbereiten eines zu recycelnden Kunststoffmaterials sowie einen daran angeschlossenen Extruder zum Aufschmelzen des derart vorbereiteten Materials, bekannt. Ziel ist es dabei, ein qualitativ möglichst hochwertiges Endprodukt, zumeist in Form eines Granulates, zu erhalten.

So ist beispielsweise in der EP 123 771 eine Vorrichtung mit einem Aufnahmebehälter und einem daran angeschlossenen Extruder beschrieben, wobei das dem Aufnahmebehälter zugeführte Kunststoffmaterial durch Rotieren der Zerkleinerungs- und Mischwerkzeuge zerkleinert und in Thrombenumlauf gebracht und durch die eingebrachte Energie gleichzeitig erwärmt wird. Dadurch bildet sich eine Mischung mit ausreichend guter thermischer Homogenität aus. Diese Mischung wird nach entsprechender Verweilzeit aus dem Aufnahmebehälter über den Schneckenextruder ausgetragen und dabei plastifiziert bzw. aufgeschmolzen. Der Schneckenextruder ist dabei etwa auf der Höhe der Zerkleinerungswerkzeuge angeordnet und radial am Aufnahmebehälter befestigt. Auf diese Weise werden die erweichten Kunststoffteilchen durch die Mischwerkzeuge aktiv in den Extruder gedrückt.

Weiters sind aus dem Stand der Technik auch zahlreiche Vorrichtungen bekannt, bei denen der Extruder tangential am Aufnahmebehälter angeschlossen ist.

All diesen Vorrichtungen ist gemeinsam, dass die Förder- bzw. Drehrichtung der Misch- und Zerkleinerungswerkzeuge und damit die Richtung, in der die Materialteilchen im Aufnahmebehälter umlaufen, und die Förderrichtung des Extruders im Wesentlichen gleich bzw. gleichsinnig sind. Diese bewusst so gewählte Anordnung wird durch den Wunsch geleitet, das Material möglichst in die Schnecke zu stopfen bzw. diese zwangszufüttern. Es wurde dabei und bei davon ausgehenden Weiterentwicklungen immer danach getrachtet, eine möglichst hohe Schneckenauffüllung und eine Verstärkung dieses Stopfeffektes zu schaffen. Beispielsweise wurde auch versucht, den Einzugsbereich des Extruders konusartig zu erweitern oder die Zerkleinerungswerkzeuge sichelförmig zu krümmen, damit diese das erweichte Material spachtelartig in die Schnecke füttern können.

Zu diesem Zweck wurde beispielsweise in der WO 88/02684 eine Vorrichtung beschrieben, bei der die Extruderschnecke von der radialen Position abgerückt und radial versetzt, jedoch nicht tangential, am Aufnahmebehälter angeschlossen wurde. Diese seitliche Versetzung hat zur Folge, dass die in Axialrichtung der Extruderschnecke wirkende Kraftkomponente der vom rotierenden Werkzeug ausgeübten Umfangskraft größer wird im Vergleich zu einer Anordnung, bei der die Schneckenachse radial am Aufnahmebehälter angeordnet ist. *Die gedachte Verlängerung der zentralen Längsachse des Förderers bzw. der Schnecke entgegen der Förderrichtung des Förderers führt hier an der Drehachse des Aufnahmebehälters vorbei ohne diese zu schneiden.* Durch diese zulaufseitige Versetzung wird der Stopfeffekt noch weiter verstärkt und das Kunststoffmaterial wird vom umlaufenden Werkzeug noch besser in den Extruder hineingefördert bzw. -gedrückt.

Derartige Vorrichtungen sind für manche Materialien durchaus vorteilhaft, insbesondere für verstreckte bzw. sehr starke Kunststoffe sowie für harte, kleinstückige Flakes. Die EP 1273412 zeigt eine weitere Vorrichtung mit einem Aufnahmebehälter und einem Förderer. Die WO 2004 108379 zeigt eine Vorrichtung nach dem Oberbegriff von Anspruch 1.

Es hat sich nun jedoch in Versuchen herausgestellt, dass derartige Vorrichtungen überraschenderweise nicht für alle zu rezyklierenden Kunststoftmaterialien im gleichen Maße vorteilhaft einsetzbar sind und im Gegenteil in manchen Bereichen sogar Nachteile haben können.

So wurde, beispielsweise bei Materialien mit einem geringen Energieinhalt, wie z.B. PET-Fasem oder -folien, oder bei Materialien mit einem frühen Klebrigkeits- oder Erwelchungspunkt, wie z.B. Polymilchsäure (PLA), immer wieder der Effekt beobachtet, dass das bewusste Stopfen des Kunststoffmaterials in den Einzugsbereich des Extruders unter Druck zu einem frühzeitigen Aufschmelzen des Materials führt. Dadurch verringert sich einerseits die Förderwirkung des Extruders bzw. der Nutenbuchse durch die geringere Verzahnung des Materials mit den Nuten. Zudem kann es auch zu einem teilweisen Rückfluss dieser Schmelze in den Bereich des Schneidverdichters bzw. Aufnahmebehälters kommen, was dazu führt, dass sich noch ungeschmolzene Flakes an die Schmelze anhaften, dadurch die Schmelze wieder abkühlt und teilweise erstarrt und sich auf diese Weise ein geschwulstartiges Gebilde bzw. Konglomerat aus teilweise erstarrter Schmelze und festen Kunststoffteilchen bildet. Dadurch verstopft der Einzug des Extruders und verkleben die Misch- und Zerkleinerungswerkzeuge. In weiterer Folge verringert sich der Durchsatz des Extruders, da keine ausreichende Befüllung der Schnecke mehr vorliegt. Zudem können sich dabei die Misch- und Zerkleinerungswerkzeuge festfahren. In der Regel muss in solchen Fällen die Anlage abgestellt werden und vollständig gesäubert werden.

Außerdem treten Probleme bei solchen Polymermaterialien auf, die im Schneidverdichter bereits bis nahe an ihren Schmelzbereich erwärmt wurden. Wird hierbei die Nutenbuchse überfüllt, schmilzt das Material auf und der Einzug lässt nach.

Auch bei, meist verstreckten, streifigen, faserigen Materialien mit einer gewissen Längenausdehnung und einer geringen Dicke bzw. Steifigkeit, also beispielsweise bei in Streifen geschnittenen Kunststofffollen, ergeben sich Probleme. Dies in erster Linie dadurch, dass sich das längliche Material am ablaufseitigen Ende der Einzugsöffnung der Schnecke festhängt, wobei ein Ende des Streifens in den Aufnahmebehälter ragt und das andere Ende in den Einzugsbereich. Da sowohl die Mischwerkzeuge als auch die Schnecke gleichsinnig laufen bzw. die gleiche Förderrichtungs- und Druckkomponente auf das Material ausüben, werden beide Enden des Streifens in die gleiche Richtung zug- und druckbeaufschlagt und kann sich der Streifen nicht mehr lösen. Dies führt wiederum zu einem Anhäufen des Materials in diesem Bereich, zu einer Verengung des Querschnitts der Einzugsöffnung und zu einem schlechteren Einzugsverhalten und in weiterer Folge zu Durchsatzeinbußen. Außerdem kann es durch den erhöhten Beschickungsdruck in diesem Bereich zu einem Aufschmelzen kommen, wodurch wiederum die eingangs erwähnten Probleme auftreten.

Es ist somit Aufgabe der vorliegenden Erfindung eine Vorrichtung zu schaffen, mit der die eingangs erwähnten Nachteile vermieden werden können und mit der auch empfindliche oder streifenförmige Materialien problemlos von der Schnecke eingezogen werden können.

Diese Aufgabe wird bei einer Vorrichtung der eingangs erwähnten Art durch die kennzeichnenden Merkmale des Anspruchs 1 gelöst.

*Erfindungsgemäß ist dabei vorgesehen, dass die Längsachse des Förderers bzw. der Schnecke in Dreh- und Bewegungsrichtung des an der Öffnung vorbeilaufenden Misch- und*/*oder Zerkleinerungswerkzeugs bzw. des an der Öffnung vorbeibewegten Kunststoffmaterials ablaufseitig zu der zur Längsachse parallelen, von der Drehachse des Misch- und*/*oder Zerkleinerungswerkzeugs in Förderrichtung des Förderers nach außen gerichteten Radialen des Behälters um einen Abstand versetzt ist.*

Die Längsachse des Förderers ist *also* relativ zu der dazu gleichgerichteten bzw. parallelen Radialen des Aufnahmebehälters ablaufseitig bzw. in Dreh- bzw. Bewegungsrichtung des an der Öffnung vorbeilaufenden Misch- und/oder Zerkleinerungswerkzeugs bzw. des an der Öffnung vorbeistreichenden Kunststoffmaterials um einen bestimmten Abstand versetzt,

Damit ist die Förderrichtung der Mischwerkzeuge und die Förderrichtung des Extruders nicht mehr, wie aus dem Stand der Technik bekannt, gleichsinnig, sondern zumindest geringfügig gegensinnig, wodurch der eingangs erwähnte Stopfeffekt verringert wird. Durch die bewusste Umkehrung der Drehrichtung der Misch- und Zerkleinerungswerkzeuge im Vergleich zu bislang bekannten Vorrichtungen, nimmt der Beschickungsdruck auf die Einzugsposition ab und verringert sich das Risiko einer Überfüllung. Überschüssiges Material wird auf diese Weise nicht mit übermäßigem Druck in den Einzugsbereich des Extruders gestopft bzw. gespachtelt, sondern im Gegenteil wird überschüssiges Material sogar tendenziell wieder von dort entfernt, sodass zwar immer ausreichend Material im Einzugsbereich vorliegt, jedoch nahezu drucklos bzw. nur mit geringem Druck beaufschlagt wird. Auf diese Weise kann die Extruderschnecke ausreichend befüllt werden und immer ausreichend Material einziehen, ohne dass es zu lokalen Druckspitzen kommt, bei denen das Material aufschmelzen könnte.

Auf diese Weise wird ein Aufschmelzen des Materials im Bereich des Extrudereinzuges verhindert, wodurch sich die betriebliche Effizienz erhöht, die Wartungsintervalle verlängern und die Stehzeiten durch allfällige Reparaturen und Säuberungsmaßnahmen verkürzt werden.

Durch die Verringerung des Beschickungsdruckes wird auch der Druck auf allfällige, die Einzugsöffnung verschließende Schieber verringert, mit denen der Befüllungsgrad der Schnecke in bekannter Weise reguliert werden kann. Die Schieber reagieren dadurch deutlich sensibler und der Füllgrad der Schnecke lässt sich noch genauer einstellen. Insbesondere bei schwereren Materialien, wie etwa Mahlgütem aus High-Density Polyethylen (HDPE) oder PET, lässt sich so leichter der optimale Betriebspunkt der Anlage finden.

Außerdem hat es sich als überraschend vorteilhaft erwiesen, dass Materialien, die schon bis nahe an die Schmelze erweicht wurden, besser bei dem erfindungsgemäßen gegenläufigen Betrieb eingezogen werden. Insbesondere dann, wenn das Material schon in teigigem bzw. erweichtem Zustand vorliegt, schneidet sich die Schnecke das Material aus dem teigigen Ring. Bei einer Drehrichtung in Förderrichtung der Extruderschnecke würde dieser Ring eher vorbeigeschoben werden und es könnte kein Abschaben erfolgen, wodurch der Einzug nachlassen würde. Dies wird durch die erfindungsgemäße Umkehr der Drehrichtung vermieden.

Außerdem können bei der Bearbeitung der oben beschriebenen streifigen bzw. faserigen Materialien die gebildeten Verhängungen bzw. Anhäufungen leichter gelöst werden bzw. werden gar nicht erst ausgebildet, da auf der in Drehrichtung der Mischwerkzeuge ablaufseitigen bzw. stromabwärts gelegenen Kante der Öffnung der Richtungsvektor der Mischwerkzeuge und der Richtungsvektor des Extruders in fast entgegengesetzte oder zumindest geringfügig gegensinnige Richtungen zeigen, wodurch sich ein länglicher Streifen nicht um diese Kante biegen und verhängen kann, sondern von der Mischtrombe im Aufnahmebehälter wieder mitgerissen wird.

Insgesamt verbessert sich durch die erfindungsgemäße Ausgestaltung das Einzugsverhalten und vargrößert sich der Durchsatz, Das Gesamtsystem aus Schneidverdichter und Extruder wird dadurch stabiler.

Weitere vorteilhafte Ausgestaltungen der Erfindung werden durch die folgenden abhängigen Ansprüche beschrieben:

Gemäß einer vorteilhaften Weiterentwicklung der Erfindung ist vorgesehen, dass der Förderer so am Aufnahmebehälter angeordnet ist, dass das Skalarprodukt aus dem tangential zum Flugkreis des Misch- und/oder Zerkleinerungswerkzeugs bzw. zum an der Öffnung vorbeistreichenden Kunststoffmaterial und normal zur Radialen des Aufnahmebehälters ausgerichteten, in Dreh- bzw. Bewegungsrichtung des Misch- und/oder Zerkleinerungswerkzeugs weisenden Richtungsvektor und dem Richtungsvektor der Förderrichtung des Förderers in jedem einzelnen Punkt bzw. im gesamten Bereich der Öffnung bzw. in jedem einzelnen Punkt bzw. im gesamten Bereich unmittelbar vor der Öffnung null oder negativ ist. Auf diese Weise werden die eingangs erwähnten Vorteile erzielt. Insbesondere kommt es dabei auch nicht auf die räumliche Anordnung der Mischwerkzeuge und des Extruders zueinander an, beispielsweise müssen die Mischwerkzeuge und die Extruderschnecke bzw. die Öffnung nicht zwingend auf einer gemeinsamen Ebene liegen oder die Drehachse nicht normal zur Bodenfläche oder zur Längsachse des Extruders ausgerichtet sein.

Eine weitere vorteilhafte Ausgestaltung ergibt sich dadurch, dass der Richtungsvektor des Misch- und/oder Zerkleinerungswerkzeugs mit dem Richtungsvektor der Förderrichtung des Förderers einen Winkel von größer oder gleich 90° und kleiner oder gleich 180° einschließt, wobei der Winkel im Schnittpunkt der beiden Richtungsvektoren am stromaufwärts zur Dreh- bzw. Bewegungsrichtung gelegenen Rand der Öffnung gemessen wird, insbesondere im am weitesten stromaufwärts gelegenen Punkt auf diesem Rand bzw. der Öffnung. Dadurch wird derjenige Winkelbereich beschrieben, in dem der Extruder am Aufnahmebehälter angeordnet werden muss, um die vorteilhaften Effekte zu erzielen. Dabei kommt es im gesamten Bereich der Öffnung bzw. in jedem einzelnen Punkt der Öffnung zu einer zumindest geringfügigen gegensinnigen Ausrichtung der auf das Material einwirkenden Kräfte bzw. im Extremfall zu einer druckneutralen Querausrichtung. In keinem Punkt der Öffnung ist das Skalarprodukt der Richtungsvektoren der Mischwerkzeuge und der Förderschnecke positiv, nicht einmal in einem Teilbereich der Öffnung tritt somit eine zu große Stopfwirkung auf.

Eine weitere vorteilhafte Ausgestaltung der Erfindung sieht vor, dass der Richtungsvektor der Dreh- bzw. Bewegungsrichtung mit dem Richtungsvektor der Förderrichtung einen Winkel zwischen 170° und 180° einschließt, gemessen im Schnittpunkt der beiden Richtungsvektoren in der Mitte der Öffnung. Eine solche Anordnung trifft beispielsweise zu, wenn der Extruder tangential am Schneidverdichter angeordnet ist.

Um sicherzustellen, dass keine zu große Stopfwirkung auftritt, kann vorteilhafterweise vorgesehen sein, dass der Abstand größer als oder gleich wie der halbe Innendurchmesser des Gehäuses des Förderers bzw. der Schecke ist.

Weiters kann es in diesem Sinne vorteilhaft sein, den Abstand größer gleich 7 %, noch vorteilhafter größer gleich 20 %, des Radius des Aufnahmebehälters zu bemessen.

Bei radial versetzt, jedoch nicht tangential angeordneten, Extrudern ist vorteilhafterweise vorgesehen, dass die gedachte Verlängerung der Längsachse des Förderers entgegen der Förderrichtung den Innenraum des Aufnahmebehälters zumindest abschnittsweise durchsetzt.

In diesem Zusammenhang ist vorteilhaft, wenn vorgesehen ist, dass die Öffnung unmittelbar vor der in Förderrichtung hinteren Stirnseite der Schnecke angeordnet ist.

Bei Extrudern mit einem verlängerten Einzugsbereich bzw. einer Nutenbuchse oder erweiterten Tasche kann es vorteilhaft sein, wenn der Abstand größer als oder gleich wie der Radius des Aufnahmebehälters ist. Insbesondere trifft dies für Fälle zu, bei denen der Förderer tangential an den Aufnahmebehälter angeschlossen ist.

Die Umkehr der Drehrichtung der im Behälter umlaufenden Werkzeuge ist keinesfalls willkürlich, und man kann - weder bei den bekannten Vorrichtungen noch bei der erfindungsgemäßen Vorrichtung - die Mischwerkzeuge nicht ohne Weiteres in Gegenrichtung rotieren lassen, insbesondere deshalb nicht, da die Misch- und Zerkleinerungswerkzeuge in gewisser Weise asymmetrisch bzw. richtungsorientiert so angeordnet sind, dass sie nur auf eine Seite bzw. in eine Richtung wirken. Würde man eine solche Apparatur in die falsche Richtung drehen, so würde sich weder eine gute Mischtrombe ausbilden, noch würde das Material ausreichend zerkleinert oder erwärmt werden. Jeder Schneidverdichter hat somit seine fix vorgegebene Drehrichtung.

In diesem Zusammenhang ist es besonders vorteilhaft, wenn vorgesehen ist, dass die auf das Kunststoffmaterial einwirkenden in Dreh- bzw. Bewegungsrichtung weisenden vorderen Bereiche bzw. Vorderkanten der Misch- und/oder Zerkleinerungswerkzeuge unterschiedlich ausgebildet, gekrümmt, angestellt bzw. angeordnet sind im Vergleich zu den in Dreh- bzw. Bewegungsrichtung hinteren bzw. nachlaufenden Bereichen.

Eine vorteilhafte Anordnung sieht dabei vor, dass auf dem Misch- und/oder Zerkleinerungswerkzeug Werkzeuge und/oder Messer angeordnet sind, die in Dreh- bzw. Bewegungsrichtung auf das Kunststoffmaterial zerkleinernd und gegebenenfalls auch erwärmend einwirken, wobei die Messer vorzugsweise auf einer, insbesondere parallel zur Bodenfläche, angeordneten drehbaren Trägerscheibe angeordnet sind.

Grundsätzlich sind die eingangs erwähnten Effekte nicht nur bei komprimierenden Schneckenextrudern relevant, sondern auch bei nicht komprimierenden Förderschnecken. Auch hier sollen lokale Überfütterungen vermieden werden.

Bei einer weiteren vorteilhaften Ausgestaltung ist vorgesehen, dass der Aufnahmebehälter im wesentlichen zylindrisch mit einer ebenen Bodenfläche und einer dazu vertikal ausgerichteten zylindermantelförmigen Seitenwand ist.

Konstruktiv einfach ist es weiters, wenn die Drehachse mit der zentralen Mittelachse des Aufnahmebehälters zusammenfällt.

Bei einer weiteren vorteilhaften Ausgestaltung ist vorgesehen, dass die Drehachse oder die zentrale Mittelachse vertikal bzw. normal zur Bodenfläche ausgerichtet sind.

Durch diese besonderen Geometrien wird das Einzugsverhalten bei einer konstruktiv stabilen und einfach aufgebauten Vorrichtung optimiert.

In diesem Zusammenhang ist es auch vorteilhaft, vorzusehen, dass das unterste Misch- und/oder Zerkleinerungswerkzeug und/oder die Öffnung in geringem Abstand zur Bodenfläche, insbesondere im Bereich des untersten Viertels der Höhe des Aufnahmebehälters angeordnet sind.

Weiters ist es für die Bearbeitung vorteilhaft, wenn die Außenkanten der Misch- und/oder Zerkleinerungswerkzeuge bis dicht an die Seitenwand heranreichen.

Erfindungsgemäß wird außerdem ein Verfahren zum Betreiben einer solchen Vorrichtung geschaffen.

Dabei muss einerseits die Dreh- bzw. Bewegungsrichtung des Misch- und/oder Zerkleinerungswerkzeugs so eingestellt werden und das Misch- und/oder Zerkleinerungswerkzeug so ausgestaltet bzw. die Messer so angeordnet werden und das Misch- und/oder Zerkleinerungswerkzeug im Aufnahmebehälter so angeordnet und ausgerichtet werden, dass eine ordnungsgemäße Mischung und Bearbeitung des Polymermaterials erfolgt. Dabei muss sich eine ordentliche Mischthrombe ausbilden und müssen die Misch- und/oder Zerkleinerungswerkzeug auf das Material korrekt einwirken können, d.h. mischend, erwärmend und gegebenenfalls zerkleinernd.

Außerdem muss beachtet werden, dass die Dreh- bzw. Bewegungsrichtung des Misch- und/oder Zerkleinerungswerkzeugs so eingestellt wird, dass die gedachte Verlängerung der zentralen Längsachse des Förderers bzw. der Schnecke entgegen der Förderrichtung des Förderers an der Drehachse des Aufnahmebehälters ohne diese zu schneiden vorbeiführt, wobei die Längsachse des Förderers relativ zu der dazu gleichgerichteten bzw. parallelen Radialen des Aufnahmebehälters ablaufseitig bzw. in Dreh- bzw. Bewegungsrichtung des an der Öffnung vorbeilaufenden Misch- und/oder Zerkleinerungswerkzeugs bzw. des an der Öffnung vorbeibewegten Kunststoffmaterials um einen Abstand versetzt ist. Dadurch werden die obenstehenden vorteilhaften Effekte erzielt.

Dieses Verfahren kann durch die Merkmale der abhängigen Ansprüche zur Vorrichtung weiter ausgestaltet werden.

Weitere Vorteile und Ausgestaltungen der Erfindung ergeben sich aus der Beschreibung und den beiliegenden Zeichnungen.

Die Erfindung ist anhand von Ausführungsbeispielen in den Zeichnungen schematisch dargestellt und wird im Folgenden unter Bezugnahme auf die Zeichnungen beispielsweise beschrieben.
Fig. 1 zeigt einen Vertikalschnitt durch eine erfindungsgemäße Vorrichtung.
Fig. 2 zeigt einen Horizontalschnitt durch eine etwas abgeänderte Ausführungsform in Richtung des Pfeils II von Fig. 1.
Fig. 3 zeigt eine weitere Ausführungsform mit größerer radialer Versetzung.
Fig. 4 zeigt eine weitere Ausführungsform mit etwa tangential angeschlossenem Extruder.
Fig. 5 zeigt eine weitere Ausführungsform mit etwa tangential angeschlossenem Extruder und gekrümmten Mischwerkzeugen.
Fig. 6 zeigt eine aus dem Stand der Technik bekannte Vorrichtung.

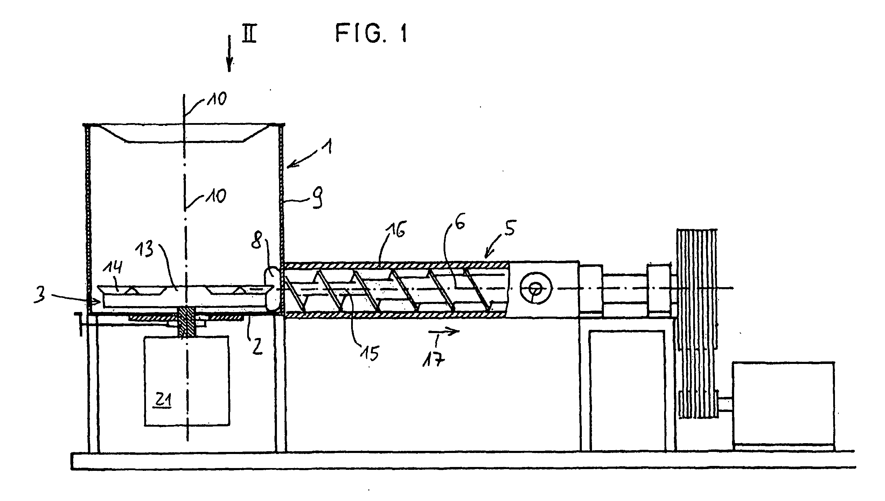

Die in Fig. 1 dargestellte vorteilhafte Vorrichtung zum Aufbereiten bzw. Recyclieren von Kunststoffmaterial weist einen Aufnahmebehälter bzw. Schneidverdichter 1 auf, wie dieser aus dem Stand der Technik, z.B. aus der EP 123 771, hinlänglich bekannt ist. Der Aufnahmebehälter 1 ist zylindrisch mit einer ebenen Bodenfläche 2 und einer dazu vertikal ausgerichteten zylindermantelförmigen Seitenwand 9.

In geringem Abstand zur Bodenfläche 2, in etwa 10 bis 20 %, gegebenenfalls weniger, der Höhe der Seitenwand 9 - gemessen von der Bodenfläche 2 zum obersten Rand der Seitenwand 9 - ist eine parallel zur Bodenfläche 2 ausgerichtete, ebene Trägerscheibe 13 angeordnet, die um eine zentrale Drehachse 10, die gleichzeitig die zentrale Mittelachse des Aufnahmebehälters 1 ist, in die mit einem Pfeil markierte Dreh- bzw. Bewegungsrichtung 12 drehbar ist. Die Trägerscheibe 13 ist über einen Motor 21 angetrieben, der sich unterhalb des Aufnahmebehälters 1 befindet. Auf der Trägerscheibe 13 sind Messer 14 angeordnet, die gemeinsam mit der Trägerscheibe 13 das Misch- und/oder Zerkleinerungswerkzeug 3 bilden.

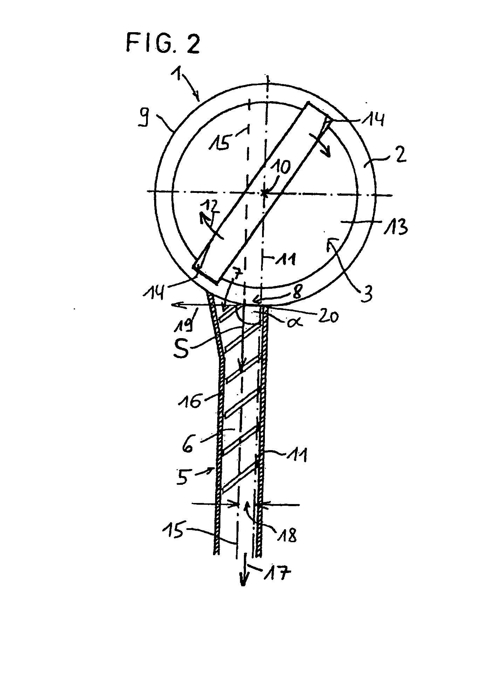

Wie in Fig. 2 schematisch angedeutet, sind die Messer 14 auf der Trägerscheibe 13 nicht regelmäßig angeordnet, sondern sind auf der in die Dreh- bzw. Bewegungsrichtung 12 weisenden vorderen Kante besonders ausgebildet, angestellt bzw. angeordnet, um auf das Kunststoffmaterial einwirken zu können. Dadurch bildet sich im Aufnahmebehälter 1 eine Mischtrombe aus, bei der das Material sowohl von oben nach unten als auch in Drehrichtung 12 herumgewirbelt wird. Eine solche Vorrichtung kann somit aufgrund der besonderen Anordnung der Misch- und Zerkleinerungswerkzeuge 3 bzw. der Messer 14 nur in die vorgegebene Dreh- bzw. Bewegungsrichtung 12 betrieben werden und kann die Drehrichtung 12 nicht ohne weiteres oder ohne Änderungen umgedreht werden.

Weiters können zur besseren Zuführung des Materials zur Öffnung 8 Abweiser am Behälterumfang bzw. an der Seitenwand 9 montiert sein.

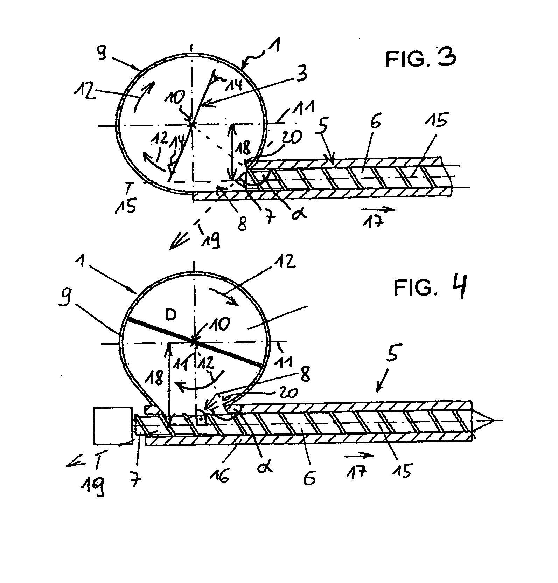

Die in den Fig. 3 und 4 dargestellten Misch- und Zerkleinerungswerkzeuge 3 sind ebenfalls lediglich schematisch dargestellt. Die Messer 14 sind an den auf das Material einwirkenden Vorderkanten 22 angeordnet (Fig. 3).

Theoretisch ist es auch möglich, dass die Misch- und Zerkleinerungswerkzeuge 3 regelmäßig bzw. symmetrisch aufgebaut sind. Auch dann ist die Dreh- bzw. Bewegungsrichtung 12 jedoch nicht willkürlich umkehrbar, sondern entweder motorbedingt vorgegeben oder durch spezielle Geometrien des Aufnahmebehälters 1 und/oder des Einzugsbereichs des Extruders 5 festgelegt.

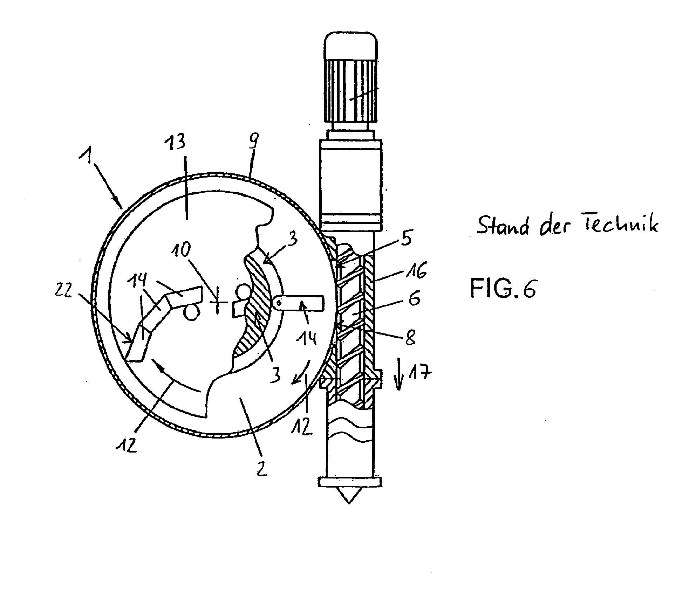

Im Vergleich ist in Fig. 6 eine aus dem Stand der Technik bekannte Vorrichtung dargestellt. Diese besitzt zwei Ebenen von Misch- und Zerkleinerungswerkzeugen 3, die in Richtung der Pfeils 12 rotieren, also nicht in die erfindungsgemäße Richtung. In Nähe des Bodens 2 sind in der unteren Ebene umlaufende Messer 14 angeordnet, die radial und gerade ausgerichtet sind. In der darüberliegenden Ebene sind auf einer Trägerscheibe 13 Messer 14 mit vorderen Schneidkanten 22 angeordnet, die entgegen der Umlaufrichtung 12 gekrümmt bzw. abgewinkelt sind. Im Betrieb ergibt sich dadurch beim Umlauf dieser Werkzeuge die gewünschte und notwendige Mischthrombe. Eine simple Änderung der Drehrichtung 12 ist also gerade hier nicht möglich.

Auf der Höhe des im vorliegenden Fall einzigen Zerkleinerungs- und Mischwerkzeugs 3 ist in der Seitenwand 9 des Aufnahmebehälters 1 eine Öffnung bzw. Eintritts- bzw. Fütterungsöffnung 8 ausgebildet, an die das Gehäuse 16 eines Förderers 5 angeschlossen ist. Im Gehäuse 16 ist eine komprimierende Extruderschnecke 6 drehbar gelagert, die über eine Welle vom Motor 21 angetrieben wird.

Die Außenkanten der Misch- und Zerkleinerungswerkzeuge 3 reichen bis relativ nahe, etwa 5 % des Radius, an die Seitenwand 9 heran. Die Schnecke 6 und das Gehäuse 16 des Extruders 5 sind im Bereich der Öffnung 8 an die Kontur der Innenwand des Aufnahmebehälters 1 angepasst und zurückversetzt. Kein Teil des Extruders 5 ragt in den Innenraum des Aufnahmebehälters 1 hinein. Die Misch- und/oder Zerkleinerungswerkzeuge 3 bzw. die Messer 14 liegen auf nahezu derselben Höhe bzw. Ebene wie die zentrale Längsachse 15 des Extruders 5. Die äußersten Enden der Messer 14 sind jedoch ausreichend von der Stirnseite 7 des Extruders 5 beabstandet.

In den in den Figuren dargestellten Beispielen handelt es sich immer um einen komprimierenden Einwellen- bzw. Einschneckenextruder. Alternativ ist jedoch auch die Vorsehung von Doppel- oder Mehrwellenextrudern möglich oder der Einbau von nicht komprimierenden Förderschnecken.

Im Betrieb wird das aufzubereitende Kunststoffmaterial, meist in Form von Kunststoffabfall, Flaschen oder Folien; über einen offenen Aufgabetrichter in den Aufnahmebehälter 1 eingebracht. Alternativ kann vorgesehen sein, dass der Aufnahmebehälter 1 geschlossen und zumindest auf eine technisches Vakuum evakuierbar ist. Das eingebrachte Kunststoffmaterial wird von den umlaufenden Misch- und Zerkleinerungswerkzeugen 3 zerkleinert, gemischt und dabei über die eingebrachte mechanische Reibungsenergie erwärmt und erweicht, jedoch nicht aufgeschmolzen. Nach einer gewissen Verweilzeit im Aufnahmebehälter 1 wird das erweichte, aber nicht geschmolzene Material in den Einzugsbereich des Extruders 5 bzw. in die Öffnung 8 eingebracht und dort von der Schnecke 6 erfasst und in weiterer Folge aufgeschmolzen.

In Fig. 2 ist ein Schnitt durch eine der Fig. 1 sehr ähnliche Ausführungsform auf der Ebene der Extruderschnecke 6 dargestellt. Erkennbar ist, dass die Drehachse 10 sowie die zentrale Mittelachse des Aufnahmebehälters 1 zusammenfallen und der Querschnitt des Aufnahmebehälters 1 kreisförmig ist. Alternativ wären auch elliptische Formen oder eine exzentrische Anordnung der Drehachse 10 möglich.

Der Extruder 5 ist ein an sich bekannter, herkömmlicher Extruder, bei dem in einer ersten Zone das erweichte Kunststoffmaterial aufgeschmolzen wird, anschließend eine Komprimierung erfolgt und die Schmelze dann auf der gegenüberliegenden Seite austritt. Der Extruder 5 fördert in Richtung des Pfeils 17. Das Gehäuse 16 sowie die Schnecke 6 sind im Einzugsbereich ablaufseitig konisch etwas erweitert. Die Öffnung 8 ist unmittelbar vor der hinteren Stirnseite 7 der Schnecke 6 angeordnet.

Bei der Ausführungsform gemäß Fig. 2 ist der Extruder bzw. Förderer 5 nicht radial am Aufnahmebehälter 1 angeschlossen, sondern ablaufseitig versetzt. Die gedachte Verlängerung der zentralen Längsachse 15 des Förderers 5 bzw. der Schnecke 6 entgegen der Förderrichtung 17 des Förderers 5 nach hinten führt links neben der Drehachse 10 vorbei, ohne diese zu schneiden. Die Längsachse 15 ist dabei relativ zu der dazu gleichgerichteten bzw. parallelen Radialen 11 des Aufnahmebehälters 1 um einen Abstand 18 in Dreh- bzw. Bewegungsrichtung 12 versetzt. Die nach hinten gedachte Verlängerung der Längsachse 15 des Förderers 5 durchsetzt den Innenraum des Aufnahmebehälters 1.

Der Abstand 18 in Fig. 2 entspricht etwa 15 bis 20 % des Radius des Aufnahmebehälters 1. Der Abstand 18 entspricht im vorliegenden Fall etwa dem halben Innendurchmesser des Gehäuses 16 und stellt somit einen ersten Grenzfall bzw. Extremwert mit kleinstmöglichem Versatz bzw. Abstand 18 dar, bei dem die Dreh- bzw. Bewegungsrichtung 12 der Misch- und/oder Zerkleinerungswerkzeuge 3 der Förderrichtung 17 des Förderers 5 zumindest geringfügig entgegengerichtet ist und zwar über die gesamte Fläche der Öffnung 8. Unter den Begriffen "entgegengerichtet" oder "gegensinnig" wird hier jegliche Ausrichtung der Vektoren zueinander verstanden, die nicht spitzwinkelig ist, wie im folgenden im Detail erläutert wird.

Anders ausgedrückt, ist das Skalarprodukt aus einem Richtungsvektor 19 der Drehrichtung 12, der tangential zum Flugkreis des Misch- und/oder Zerkleinerungswerkzeugs 3 bzw. tangential zum an der Öffnung 8 vorbeistreichenden Kunststoffmaterial ausgerichtet ist und der in Dreh- bzw. Bewegungsrichtung 12 der Misch- und/oder Zerkleinerungswerkzeuge 3 weist, und einem Richtungsvektor 17 der Förderrichtung des Förderers 5, der in Förderichtung parallel zur zentralen Längsachse 15 verläuft, in jedem einzelnen Punkt der Öffnung 8 bzw. im Bereich unmittelbar vor der Öffnung 8 überall null oder negativ, nirgendwo jedoch positiv.

Das Skalarprodukt ist in Fig. 2 in demjenigen grenzwertigen, am weitesten stromaufwärts gelegenen, Punkt 20 genau null, der am, am weitesten stromaufwärts gelegenen, Rand der Öffnung 8 liegt. Der Winkel α zwischen dem Richtungsvektor 17 der Förderrichtung und dem Richtungsvektor 19 ist, gemessen in Punkt 20 von Fig. 2, genau 90°. Schreitet man entlang der Öffnung 8 nach links, also in Drehrichtung 12, weiter, so wird der Winkel α immer größer und zu einem stumpfen Winkel und wird das Skalarprodukt gleichzeitig negativ. An keinem Punkt oder Bereich der Öffnung 8 ist das Skalaprodukt jedoch positiv oder der Winkel α kleiner als 90°. Dadurch kann nicht einmal in einem Teilbereich der Öffnung 8 eine lokale Überfütterung erfolgen bzw. kann es in keinem Bereich der Öffnung 8 zu einer schädlichen überhöhten Stopfwirkung kommen. Damit besteht auch ein entscheidender Unterschied zu einer radialen Anordnung, da Punkt 20 bzw. die Kante 20 bei einer radialen Anordnung des Extruders 5 einen Winkel α < 90° aufweisen würde und diejenigen Bereiche der Öffnung 8, die rechts neben der Radialen 11 bzw. stromaufwärts bzw. zulaufseitig gelegen sind, hätten ein positives Skalarprodukt. Damit kann sich in diesen Bereichen lokal aufgeschmolzenes Kunststoffgut ansammeln.

In Fig. 3 ist eine alternative Ausführungsform dargestellt, bei der der Förderer 5 ablaufseitig noch weiter radial versetzt ist als bei Fig. 2 und der Abstand 18 entsprechend größer ist. Der Winkel α gemessen in Punkt 20 beträgt etwa 145°, wodurch gegenüber der Vorrichtung von Fig. 2 die Stopfwirkung noch weiter verringert wird, was für gewisse sensible Polymere noch vorteilhafter sein kann. Der vom Aufnahmebehälter 1 aus gesehene rechte Rand des Gehäuses 16 schließt tangential an den Aufnahmebehälter 1 an, wodurch im Unterschied zu Fig. 2 keine stumpfe Übergangskante ausgebildet ist, an der sich Material verfangen könnte.

In Fig. 4 ist eine weitere alternative Ausführungsform dargestellte, bei der der Extruder 5 tangential an den Aufnahmebehälter 1 angeschlossen ist. Der Winkel α gemessen in Punkt 20 zwischen dem Richtungsvektor 19 und dem Richtungsvektor 17 beträgt, nahezu maximal, etwa 160°. Im vorliegenden Fall durchsetzt die nach hinten gedachte Verlängerung der Längsachse 15 des Förderers 5 den Innenraum des Aufnahmebehälters 1 nicht mehr, sondern läuft daneben vorbei. Der Abstand 18 ist noch weiter vergrößert und sogar größer als der Radius des Aufnahmebehälters 1. Der Extruder 5 ist damit in einer taschenartigen Erweiterung nach außen versetzt bzw. ist der Einzugsbereich etwas tiefer. Ein in Fig. 4 nicht eingezeichneter, in der Mitte bzw. im Zentrum der Öffnung 8 gemessener Winkel β zwischen dem Richtungsvektor 19 und dem Richtungsvektor 17 beträgt etwa 175°. Die Vorrichtung gemäß Fig. 4 stellt den zweiten Grenzfall bzw. Extremwert vor mit der verhältnismäßig geringsten Stopfwirkung. Bei einer solchen Anordnung ist eine besonders drucklose Fütterung möglich und ist eine solche Vorrichtung insbesondere für sensible Materialien, die nahe dem Schmelzbereich bearbeitet werden oder für langstreifiges Gut vorteilhaft.

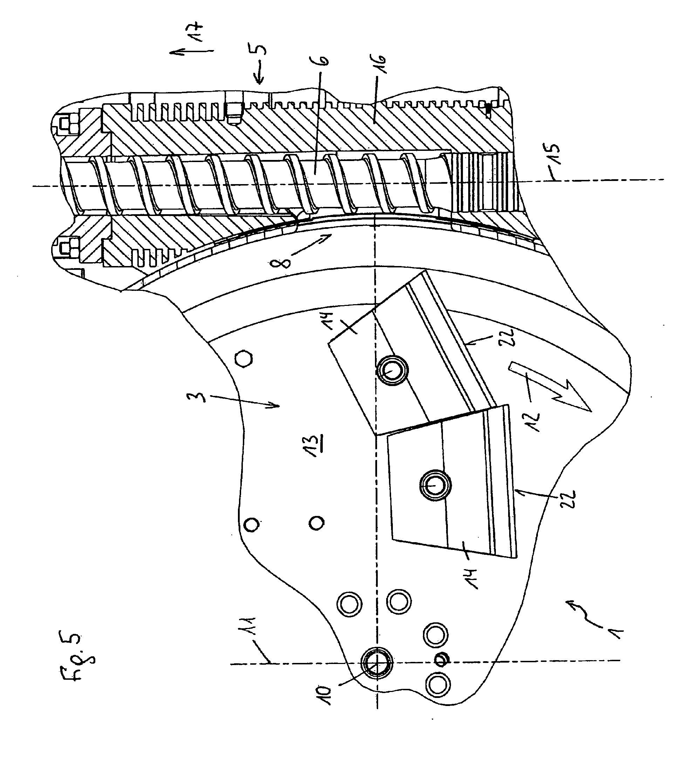

Fig. 5 zeigt eine weitere alternative Ausführungsform mit tangential angeschlossenem Extruder 5 und mit auf der Trägerscheibe 13 gekrümmt und versetzt zueinander angeordneten Messern oder Werkzeugen 14, wobei die in Drehrichtung 12 gesehen vorderen Schneidkanten 22 eine Zerkleinerung und Erwärmung des Materials bewirken.

## Patentansprüche

1. Vorrichtung zum Aufbereiten von, insbesondere thermoplastischem, Kunststoffmaterial, mit zumindest einem Aufnahmebehälter (1), in dem zumindest ein um eine Drehachse (10) drehbares Misch- und/oder Zerkleinerungswerkzeug (3) zur Mischung und Erwärmung und gegebenenfalls Zerkleinerung und/oder Erweichung, des Kunststoffmaterials angeordnet ist und mit zumindest einem Förderer (5) zum Ausbringen des Kunststoffmaterials aus dem Aufnahmebehälter (1) mit zumindest einer in einem Gehäuse (16) rotierenden Schnecke (6), wobei der Förderer (5) an seiner Materialeintrittsseite über eine in einer Seitenwand (9) des Aufnahmebehälters (1) ausgebildete Öffnung (8) für den Eintritt bzw. die Fütterung des Materials mit dem Inneren des Aufnahmebehälters (1) verbunden ist, wobei die Öffnung (8) im Bereich der Höhe des Misch- und/oder Zerklelnerungswerkzeugs (3) angeordnet ist, wobei die gedachte Verlängerung der zentralen Längsachse (15) des Förderers (5) bzw. der Schnecke (6) entgegen der Förderrichtung (17) des Förderers (5) an der Drehachse (10) des Aufnahmebehälters (1) ohne diese zu schneiden vorbeiführt, ***dadurch gekennzeichnet dass*** die Längsachse (15) des Förderers (5) bzw. der Schnecke (6) In Dreh- und Bewegungsrichtung (12) des an der Öffnung (8) vorbeilaufenden Misch- und/oder Zerkleinerungswerkzeugs (3) bzw. des an der Öffnung (8) vorbeibewegten Kunststoffmaterials ablaufseitig zu der zur Längsachse (15) parallelen, von der Drehachse (10) des Misch- und/oder Zerkleinerungswerkzeugs (3) In Förderrichtung (17) des Förderers (5) nach außen gerichteten Radialen (11) des Behälters (1) um einen Abstand (18) versetzt ist.

2. Vorrichtung nach Anspruch 1, **dadurch gekennzeichnet, dass** der Förderer (5) so am Aufnahrnabehälter (1) angeordnet ist, dass das Skalarprodukt aus dem tangential zum Flugkreis des Misch- und/oder Zerkleinerungswerkzeugs (3) bzw. zum an der Öffnung (8) vorbeibewegten Kunststoffmaterial und normal zur Radialen (11) des Aufnahmebehälters (1) ausgerichteten, in Dreh- bzw. Bewegungsrichtung (12) des Misch- und/oder Zerkleinerungswerkzeugs (3) weisenden Richtungsvektor (19) und dem Richtungsvektor (17) der Fördenichtung des Förderers (5) in jedem einzelnen Punkt bzw. im gesamten Bereich der Öffnung (8) bzw. unmittelbar vor der Öffnung (8) null oder negativ ist.

3. Vorrichtung nach Anspruch 2, **dadurch gekennzeichnet, dass** der Richtungsvektor (19) des Misch- und/oder Zendeinerungswerkzeugs (3) und der Richtungsvektor (17) der Förderrichtung des Förderers (5) einen Winkel (α) von größer oder gleich 90° und kleiner oder gleich 180° einschließen, gemessen im Schnittpunkt der beiden Richtungsvektoren (17,19) am stromaufwärts zur Dreh- bzw. Bewegungsrichtung (12) gelegenen zulaufseitigen Rand der Öffnung (8), insbesondere im am weitesten stromaufwärts gelegenen Punkt (20) auf diesem Rand bzw. der Öffnung (8).

4. Vorrichtung nach Anspruch 2 oder 3, **dadurch gekennzeichnet, dass** der Richtungsvektor (19) der Dreh- bzw. Bewegungsrichtung (12) und der Richtungsvektor (17) der Förderrichtung einen Winkel (β) zwischen 170° und 180° einschließen, gemessen im Schnittpunkt der beiden Richtungsvektoren (17,19) in der Mitte der Öffnung (8).

5. Vorrichtung nach einem der Ansprüche 1 bis 4, **dadurch gekennzeichnet, dass** der Abstand (18) größer als oder gleich wie der halbe Innendurchmesser des Gehäuses (16) des Förderers (5) bzw. der Schecke (6) ist, und/oder ≥ 7 %, vorzugsweise ≥ 20 %, des Radius des Aufnahmebehälters (1) ist.

6. Vorrichtung nach einem der Ansprüche 1 bis 5, **dadurch gekennzeichnet, dass** die gedachte Verlängerung der Längsachse (15) des Förderers (5) entgegen der Förderrichtung den Innenraum des Aufnahmebehälters (1) zumindest abschnittsweise durchsetzt.

7. Vorrichtung nach einem der Ansprüche 1 bis 6, **dadurch gekennzeichnet, dass** die Öffnung (8) unmittelbar vor der in Förderrichtung (17) hinteren Stirnseite (7) der Schnecke (6) angeordnet ist.

8. Vorrichtung nach einem der Ansprüche 1 bis 7, **dadurch, gekennzeichnet, dass** der Abstand (18) größer als oder gleich wie der Radius des Aufnahmebehälters (1) ist.

9. Vorrichtung nach einem der Ansprüche 1 bis 8, **dadurch gekennzeichnet, dass** der Förderer (5) tangential an den Aufnahmebehälter (1) angeschlossen ist.

10. Vorrichtung nach einem der Ansprüche 1 bis 9, **dadurch gekennzeichnet, dass** das Misch- und/oder Zerkleinerungswerkzeug (3) Werkzeuge und/oder Messer (14) umfasst, die in Dreh- bzw. Bewegungsrichtung (12) auf das Kunststoffmaterial zerkleinernd und gegebenenfalls erwärmend einwirken, wobei die Werkzeuge bzw. Messer (14) vorzugsweise auf einer, insbesondere parallel zur Bodenfläche (12), angeordneten drehbaren Trägerscheibe (13) angeordnet sind.

11. Vorrichtung nach einem der Ansprüche 1 bis 10, **dadurch gekennzeichnet, dass** die auf das Kunststoffmaterial einwirkenden in Dreh- bzw. Bewegungsrichtung (12) weisenden vorderen Bereiche bzw. Vorderkanten (22) der Misch- und/oder Zerkleinerungswerkzeuge (3) oder der Messer (14) unterschiedlich ausgebildet, angestellt, gekrümmt und/oder angeordnet sind im Vergleich zu den in Dreh- bzw. Bewegungsrichtung (12) hinteren bzw. nachlaufenden Bereichen.

12. Vorrichtung nach einem der Ansprüche 1 bis 11, **dadurch gekennzeichnet, dass** der Förderer (5) ein nicht komprimierender Schneckenförderer oder ein komprimierender Schneckenextruder ist.

13. Vorrichtung nach einem der Ansprüche 1 bis 12, **dadurch gekennzeichnet, dass** der Aufnahmebehälter (1) im wesentlichen zylindrisch mit einer ebenen Bodenfläche (2) und einer dazu vertikal ausgerichteten zylindermantelförmigen Seitenwand (9) ist und/oder die Drehachse (12) mit der zentralen Mittelachse des Aufnahmebehälters (1) zusammenfällt und/oder die Drehachse (12) oder die zentrale Mittelachse vertikal bzw. normal zur Bodenfläche (2) ausgerichtet sind.

14. Vorrichtung nach einem der Ansprüche 1 bis 13, **dadurch gekennzeichnet, dass** das unterste Misch- und/oder Zerkleinerungswerkzeug (3) und/oder die Öffnung (8) in geringem Abstand zur Bodenfläche (2), insbesondere im Bereich des untersten Viertels der Höhe des Aufnahmebehälters (1) angeordnet sind.

15. Vorrichtung nach einem der Ansprüche 1 bis 14, **dadurch gekennzeichnet, dass** die Außenkanten der Misch- und/oder Zerkleinerungswerkzeuge (3) bis dicht an die Seitenwand (9) heranreichen.

16. Verwendung einer Vorrichtung gemäß einem der Ansprüche 1 bis 15 zur Aufbereitung bzw. Recyclierung von, insbesondere thermoplastischem, Kunststoffmaterial.

17. Verfahren zum Betreiben einer Vorrichtung gemäß einem der Ansprüche 1 bis 15, **dadurch gekennzeichnet, dass** insbesondere unter Verwendung einer Vorrichtung gemäß einem der Ansprüche 1 bis 15, die Dreh- bzw. Bewegungsrichtung (12) des Misch- und/oder Zerkleinerungswerkzeugs (3) so eingestellt wird und das Misch- und/oder Zerkleinerungswerkzeug (3) so ausgestaltet und im Aufnahmebehälter (1) so angeordnet und ausgerichtet wird, dass eine ordnungsgemäße Mischung und Bearbeitung des Polymermaterials erfolgt, wobei die Dreh- bzw. Bewegungsrichtung (12) des Misch- und/oder Zerkleinerungswerkzeugs (3) außerdem so eingestellt wird, dass die gedachte Verlängerung der zentralen Längsachse (15) des Förderers (5) bzw. der Schnecke (6) entgegen der Förderrichtung des Förderers (5) an der Drehachse (10) des Aufnahmebehälters (1) ohne diese zu schneiden vorbeiführt, wobei die Längsachse (15) des Förderers (5) relativ zu der dazu gleichgerichteten bzw. parallelen Radialen (11) des Aufnahmebehälters (1) ablaufseitig bzw. in Dreh- bzw. Bewegungsrichtung (12) des an der Öffnung (8) vorbeilaufenden Misch- und/oder Zerkleinerungswerkzeugs (3) bzw. des an der Öffnung (8) vorbeibewegten Kunststoffmaterials um einen Abstand (18) versetzt ist.

## Claims

1. A device for treating, in particular, thermoplastic plastic material, with at least one receiving container (1), in which the at least one mixing and/or crushing tool (3) rotatable about an axis of rotation is arranged for mixing and heating and if applicable crushing and/or softening the plastic material, and having at least one conveyor (5) for bringing the plastic material out of the receiving container (1) having at least one screw conveyor (6) rotating in a housing (16), wherein the conveyor (5) is connected with the interior of the receiving container (1) on its material inlet side via an opening formed in a side wall (9) of the receiving container (1) for the entrance or the feeding of the material, wherein the opening (8) is arranged in the area of the height of the mixing and/or crushing tool (3), wherein the designed extension of the central longitudinal axis (15) of the conveyor (5) or the conveyor screw (6) passes by contrary to the conveyor direction (17) of the conveyor (5) on the axis of rotation (10) of the receiving container (1) without cutting the latter, **characterized in that** the longitudinal axis (15) of the conveyor (5) or the conveyor screw (6) is displaced a distance (18) in the direction of rotation and motion (12) of the mixing and/or crushing tool (3) running past the opening (8) or of the plastic material moved past the opening (8) on the discharge side to the radials (11) of the container (1) parallel to longitudinal axis (15), directed outwards from the axis of rotation (10) of the mixing and/or crushing tool (3) in the conveyor direction (17) of the conveyor (5).

2. Device according to Claim 1, **characterized in that** the conveyor (5) is arranged in such a way on the receiving container (1) that the scalar product of the direction vector (19) which is oriented so it is tangential with respect to the circle of rotation of the mixing and/or comminution tool (3), or with respect to the plastic material that is moved past the opening (8), and normal with respect to the radial ray (11) of the receiving container (1), and which points in the rotation or movement direction (12) of the mixing and/or comminution tool (3), and the direction vector (17) of the conveyance direction of the conveyor (5), is zero or negative at each individual point, or in the entire area of the opening (8), or immediately before the opening (8).

3. Device according to Claim 2, **characterized in that** the direction vector (19) of the mixing and/or comminution tool (3) and the direction vector (17) of the conveyance direction of the conveyor (5) form an angle (α) greater than or equal to 90°, and smaller than or equal to 180°, measuredat the intersection of the two direction vectors (17, 19), at the margin of the opening (8), which is upstream with respect to the rotation or movement direction (12), particularly at the point (20) that is located farthest upstream on this margin or the opening (8).

4. Device according to Claim 2 or 3, **characterized in that** the direction vector (19) of the rotation or movement direction (12), and the direction vector (17) of the conveyance direction enclose an angle (β) of 170-180°, measured at the intersection of the two direction vectors (17, 19) in the middle of the opening (8).

5. Device according to one of Claims 1-4, **characterized in that** the separation (18) is greater than or equal to half the inner diameter of the housing (16) of the conveyor (5) or of the screw (6), and/or ≥ 7%, preferably ≥ 20%, of the radius of the receiving container (1).

6. Device according to one of Claims 1-5, **characterized in that** the imaginary extension of the longitudinal axis (15) of the conveyor (5), against the conveyance direction, penetrates the internal space of the receiving container (1) at least in sections.

7. Device according to one of Claims 1-6, **characterized in that** the opening (8) is arranged immediately before the rear end face (7), in the conveyance direction (17), of the screw (6).

8. Device according to one of Claims 1-7, **characterized in that** the separation (18) is greater than or equal to the radius of the receiving container (1).

9. Device according to one of Claims 1-8, **characterized in that** the conveyor (5) is connected tangentially on the receiving container (1).

10. Device according to one of Claims 1-9, **characterized in that** the mixing and/or comminution tool (3) comprises tools and/or knives (14) that act, in the rotation or movement direction (12), on the plastic material, with comminution effect and optionally also warming effect, where the tools or knives (14) are arranged preferably on a rotatable carrier disk (13), particularly one that is arranged parallel to the bottom surface (12).

11. Device according to one of Claims 1-10, **characterized in that** the front areas or front edges (22) of the mixing and/or comminution tools (3) or of the knives (14), which act on the plastic material, and point in the rotation or movement direction (12), are designed, placed, curved, or arranged differently in comparison to the rear areas, in the rotation or movement direction (12), or lagging areas.

12. Device according to one of Claims 1-11, **characterized in that** the conveyor (5) is a noncompressive screw conveyor or a compressive screw conveyor.

13. Device according to one of Claims 1-12, **characterized in that** the receiving container (1) is substantially cylindrical, with a flat bottom surface (2) and a cylinder barrel-shaped side wall (9) that is vertical with respect to the bottom surface, and/or the rotation axis (12) coincides with the central middle axis of the receiving container (1), and/or the rotation axis (12) or the central middle axis present an orientation that is vertical or normal with respect to the bottom surface (2).

14. Device according to one of Claims 1-13, **characterized in that** the lowermost mixing and/or comminution tool (3) and/or the opening (8) are arranged at a small separation from the bottom surface (2), particularly in the area of the lowermost quarter of the height of the receiving container (1).

15. Device according to one of Claims 1-14, **characterized in that** the outer edges of the mixing and/or comminution tools (3) extend close to the side wall (9).

16. Use of a device according to one of Claims 1-15 for processing or recycling plastic material, particularly thermoplastic material.

17. Method for operating a device according to one of Claims 1-15, **characterized in that**, particularly using a device according to one of Claims 1-15, the rotation and/or movement direction (12) of the mixing and/or comminution tool (3) is set in such a way, and the mixing and/or comminution tool (3) is designed, and arranged and oriented in the receiving container (1), in such a way that a proper mixing and processing of the polymer material occurs, where the rotation and/or movement direction (12) of the mixing and/or comminution tool (3) is also set in such a way that the imaginary extension of the central longitudinal axis (15) of the conveyor (5) or of the screw (6) extends, against the conveyance direction of the conveyor (5), past the rotation axis (10) of the receiving container (1), without intersecting the axis, where the longitudinal axis (15) of the conveyor (5) is offset by a separation (18) relative to the radial ray (11) of the receiving container (1), which is in the same direction as or parallel to the longitudinal axis, on the discharge side, or in the rotation or movement direction (12) of the mixing and/or comminution tool (3) that moves past the opening (8), or of the plastic material that is moved past the opening (8).

## Revendications

1. Dispositif pour la préparation de matières plastiques, en particulier des matières thermoplastiques, comportant au moins une cuve de réception (1), dans laquelle est disposé au moins un outil de brassage et/ou de concassage (3), apte à tourner autour d'un axe de rotation (10) et destiné à mélanger et chauffer et, le cas échéant, à concasser et ramollir la matière plastique, et comportant au moins un convoyeur (5) pour amener la matière plastique hors de la cuve de réception (1) avec au moins une vis sans fin (6) en rotation dans un carter (16), ledit convoyeur (5) étant relié, sur son côté entrée de la matière, au volume intérieur de la cuve de réception (1) via une ouverture (8) pour l'entrée et l'approvisionnement de la matière, réalisée dans une paroi latérale (9) de la cuve de réception (1), ladite ouverture (8) étant disposée dans la zone à hauteur de l'outil de brassage et/ou de concassage (3), le prolongement imaginaire de l'axe longitudinal (15) central du convoyeur (5), plus précisément de la vis sans fin (6), dans le sens opposé à la direction de transport (17) du convoyeur (5), étant passant devant l'axe de rotation (10) de la cuve de réception (1) sans croiser celui-ci, **caractérisé en ce que** l'axe longitudinal (15) du convoyeur (5), plus précisément de la vis sans fin (6), étant décalé du côté évacuation sur une distance (18), dans la direction de rotation et de déplacement (12) de l'outil de brassage et/ou de concassage (3) passant devant l'ouverture (8) ou de la matière plastique déplacée devant l'ouverture (8), par rapport aux radiales (11) de la cuve (1), parallèles à l'axe longitudinal (15), orientées vers l'extérieur à partir de l'axe de rotation (10) de l'outil de brassage et/ou de concassage (3) dans la direction de transport (17) du convoyeur (5).

2. Dispositif selon la revendication 1, **caractérisé en ce que** le convoyeur (5) est disposé sur la cuve de réception (1) de telle sorte que le produit scalaire résultant du vecteur de direction (19), orienté tangentiellement au cercle de rotation de l'outil de brassage et/ou de concassage (3) ou à la matière plastique déplacée devant l'ouverture (8) et perpendiculairement aux radiales (11) de la cuve de réception (1) et dirigé dans la direction de rotation et déplacement (12) de l'outil de brassage et/ou de concassage (3), et du vecteur de direction (17) de la direction de transport du convoyeur (5) dans chaque point et dans toute la zone de l'ouverture (8) ou directement devant l'ouverture (8), est nul ou négatif.

3. Dispositif selon la revendication 2, **caractérisé en ce que** le vecteur de direction (19) de l'outil de brassage et/ou de concassage (3) et le vecteur de direction (17) de la direction de transport du convoyeur (5) forment un angle (α) supérieur ou égal à 90° et inférieur ou égal à 180°, mesuré au point d'intersection des deux vecteurs de direction (17, 19) au niveau du bord de l'ouverture (8), situé du côté entrée en amont de la direction de rotation et de déplacement (12), en particulier dans le point (20) le plus éloigné en amont, sur ledit bord ou l'ouverture (8).

4. Dispositif selon la revendication 2 ou 3, **caractérisé en ce que** le vecteur de direction (19) de la direction de rotation et de déplacement (12) et le vecteur de direction (17) de la direction de transport forment un angle (β) entre 170° et 180°, mesuré au point d'intersection des deux vecteurs de direction (17, 19) au milieu de l'ouverture (8).

5. Dispositif selon l'une quelconque des revendications 1 à 4, **caractérisé en ce que** la distance (18) est supérieure ou égale à la moitié du diamètre intérieur du carter (16) du convoyeur (5) ou de la vis sans fin (6), et/ou ≥ 7 %, de préférence ≥ 20 % du rayon de la cuve de réception (1).

6. Dispositif selon l'une quelconque des revendications 1 à 5, **caractérisé en ce que** le prolongement imaginaire de l'axe longitudinal (15) du convoyeur (5) dans le sens opposé à la direction de transport traverse au moins par zones le volume intérieur de la cuve de réception (1).

7. Dispositif selon l'une quelconque des revendications 1 à 6, **caractérisé en ce que** l'ouverture (8) est disposée directement devant la face frontale arrière (7), par référence à la direction de transport (17), de la vis sans fin (6).

8. Dispositif selon l'une quelconque des revendications 1 à 7, **caractérisé en ce que** la distance (18) est supérieure ou égale au rayon de la cuve de réception (1).

9. Dispositif selon l'une quelconque des revendications 1 à 8, **caractérisé en ce que** le convoyeur (5) est raccordé tangentiellement à la cuve de réception (1).

10. Dispositif selon l'une quelconque des revendications 1 à 9, **caractérisé en ce que** l'outil de brassage et/ou de concassage (3) comporte des outils et/ou des lames de coupe (14) qui agissent dans la direction de rotation et de déplacement (12) sur la matière plastique en la concassant et, le cas échéant, en la chauffant, lesdits outils ou lames de coupe (14) étant disposés de préférence sur un disque support (13) rotatif, agencé en particulier parallèlement au fond (12).

11. Dispositif selon l'une quelconque des revendications 1 à 10, **caractérisé en ce que** les zones avant ou bords avant (22) des outils de brassage et/ou de concassage (3) ou des lames de coupe (14) orientés dans la direction de rotation et de déplacement (12) et agissant sur la matière plastique, sont réalisés, approchés, courbés et/ou agencés différemment en comparaison des zones arrière ou en aval par référence à la direction de rotation et de déplacement (12).

12. Dispositif selon l'une quelconque des revendications 1 à 11, **caractérisé en ce que** le convoyeur (5) est un convoyeur à vis sans fin agissant par compression ou une extrudeuse à vis sans fin agissant par compression.

13. Dispositif selon l'une quelconque des revendications 1 à 12, **caractérisé en ce que** la cuve de réception (1) est sensiblement cylindrique avec un fond (2) plan et une paroi latérale (9) formant la chemise cylindrique orientée verticalement par rapport audit fond et/ou l'axe de rotation (12) coïncide avec l'axe médian central de la cuve de réception (1) et/ou l'axe de rotation (12) ou l'axe médian central sont orientés verticalement, plus précisément perpendiculairement au fond (2).

14. Dispositif selon l'une quelconque des revendications 1 à 13, **caractérisé en ce que** l'outil de brassage et/ou de concassage (3) le plus inférieur et/ou l'ouverture (8) sont disposés à faible distance du fond (2), en particulier dans la zone du quart inférieur de la hauteur de la cuve de réception (1).

15. Dispositif selon l'une quelconque des revendications 1 à 14, **caractérisé en ce que** les bords extérieurs des outils de brassage et/ou de concassage (3) s'avancent jusqu'à une étroite distance de la paroi latérale (9).

16. Utilisation d'un dispositif selon l'une quelconque des revendications 1 à 15 permettant la préparation ou le recyclage d'une matière plastique, en particulier une matière thermoplastique.

17. Procédé permettant le fonctionnement d'un dispositif selon l'une quelconque des revendications 1 à 15, **caractérisé en ce que**, en particulier moyennant l'utilisation d'un dispositif selon l'une quelconque des revendications 1 à 15, la direction de rotation et de déplacement (12) de l'outil de brassage et/ou de concassage (3) est définie et l'outil de brassage et/ou de concassage (3) est configuré et est agencé et orienté dans la cuve de réception (1), de telle sorte qu'il se produit un brassage et un traitement corrects du matériau polymère, la direction de rotation et de déplacement (12) de l'outil de brassage et/ou de concassage (3) étant définie en outre de telle sorte que le prolongement imaginaire de l'axe longitudinal (15) central du convoyeur (5), plus précisément de la vis sans fin (6) dans le sens opposé à la direction de transport du convoyeur (5) est guidé devant l'axe de rotation (10) de la cuve de réception (1) sans couper celui-ci, l'axe longitudinal (15) du convoyeur (5) étant décalé sur une distance (18) par rapport aux radiales (11) parallèles de la cuve de réception (1) du côté évacuation et dans la direction de rotation et de déplacement (12) de l'outil de brassage et/ou de concassage (3) passant devant l'ouverture (8), ou de la matière plastique déplacée devant l'ouverture (8).
